# EUROPÄISCHE PATENTSCHRIFT

(11) **EP 3 729 950 B1**
(45) Veröffentlichungstag und Bekanntmachung des Hinweises auf die Patenterteilung: **21.06.2023**
(21) Anmeldenummer: 20168464.4
(22) Anmeldetag: 07.04.2020
(51) Int. Cl.: A01F 15/07, B65B 27/12

(54) **RAFFEINRICHTUNG ZUM WAHLWEISEN SEITLICHEN ZUSAMMENFÜHREN EINER FOLIE ZUM UMWICKELN EINES BALLENS**
GATHERING DEVICE FOR SELECTIVELY LATERAL JOINING OF A FOIL FOR WRAPPING A BALE
DISPOSITIF POUR RELEVER LATÉRALEMENT ET SÉLECTIVEMENT UNE FEUILLE POUR QU'ELLE S'ENROULE AUTOUR D'UNE BALLE

(30) Priorität: 12.04.2019 DE 102019205334
(43) Veröffentlichungstag der Anmeldung: 28.10.2020
(73) Patentinhaber: Deere & Company, Moline, IL 61265 (US)
(72) Erfinder: LEBEAU, JONATHAN, 68163 Mannheim (DE); GRESSET, PASCAL, 68163 Mannheim (DE); PERROTIN, FREDERIC, 68163 Mannheim (DE)
(74) Vertreter: Stein, Stefan

(56) Entgegenhaltungen:
- EP-A1- 2 022 318
- EP-A1- 3 278 658
- GB-A- 2 249 077
- US-A- 4 235 062

## Beschreibung

Die Erfindung betrifft eine Raffeinrichtung zum wahlweisen seitlichen Zusammenführen einer Folie zum Umwickeln eines Ballens, umfassend ein mit einer Kante der Folie zusammenwirkendes Raffelement, das durch wenigstens einen fremdkraftbetätigten Antrieb, der einen Motor und ein untersetzendes Getriebe umfasst, gegenüber der Folie in seitlicher Richtung zwischen einer Außerbetriebsposition und einer Betriebsposition bewegbar ist, um die Folie bedarfsweise zu raffen, wobei eine Halteeinrichtung zur Festsetzung des Raffelements in der Betriebsposition vorhanden ist.

### Stand der Technik

Rundballenpressen werden in der Landwirtschaft verwendet, um Erntegut vom Boden aufzunehmen und in einer Ballenbildungskammer, die durch rotierende Elemente in Form von Walzen, Riemen oder Ketten begrenzt wird, zu einem Ballen zu pressen. Es gibt auch stationäre Ballenpressen, die u.a. zum Pressen von Abfällen eingesetzt werden. Der fertiggestellte Ballen wird üblicherweise anschließend in der Ballenbildungskammer oder in einem zusätzlichen Wickelgerät mit einem Wickelmaterial umwickelt, um zu verhindern, dass er auseinanderfällt. Bei dem Wickelmaterial kann es sich insbesondere um Garn, Netz oder Folie handeln.

Wenn der Ballen mit Folie umwickelt wird, kann es sinnvoll sein, die Folie am Anfang des Wickelvorgangs seitlich zusammenzuführen (zu raffen), damit sie leichter als eine auf volle Breite ausgestreckte Folie dem Ballen oder anderem, zu umwickelnden Material zugeführt werden kann (WO 00/64237 A1, DE 100 45 843 A1, US 4 235 062 A). Es wurde auch vorgeschlagen, die Folie nach dem Umwickeln des Ballens zu raffen, um sie leichter als eine auf volle Breite ausgestreckte Folie abschneiden zu können (DE 10 2009 010 547 B3, EP 3 278 658 A1, GB 2 249 077 A) oder um zu erreichen, dass die letzte Windung der Folie nicht durch Windeinwirkung abgewickelt wird (vgl. die als gattungsbildend angesehene EP 2 022 318 A1).

### Problem

Bei allen erwähnten Zuführvorrichtungen werden zwei mit der Kante der Folie zusammenwirkende Raffelemente seitlich gegenüber der Folie bewegt (d.h. symmetrisch zueinander verschoben oder verschwenkt), um die Folie bei Bedarf zu raffen. Hierzu dient ein fremdkraftbetätigter Antrieb in Form eines Rotations- oder Linearantriebs, der über einen Antriebsstrang mit den Raffelementen gekoppelt ist. Das bedeutet, dass der Antrieb und der Antriebsstrang zwischen dem Antrieb und dem Raffelement auch die Kraft bereitstellen muss, um die Folie zusammenzuführen. Diese Kräfte können bei dickeren Folien relativ groß sein und zu Verschleiß im Antriebsstrang und im Antrieb führen, sodass beide hinreichend stabil und somit groß, schwer und preisaufwändig auszuführen sind. Zudem ist sicherzustellen, dass die Raffelemente, wenn sie sich in der Betriebsposition befinden, durch die Kraft der Folie nicht wieder auseinander gezogen werden.

Der Stand der Technik erwähnt keine speziellen Maßnahmen zur Fixierung der Raffelemente in der Betriebsposition, sodass beispielsweise im Fall der EP 2 022 318 A1 davon ausgegangen werden kann, dass ein selbsthemmendes Getriebe benutzt wird oder ein derart großes Untersetzungsverhältnis zwischen dem eigentlichen Motor und dem Raffelement vorhanden ist, dass die Lagerreibung des stehenden Motors dafür sorgt, dass die Raffelemente in der Betriebsposition nicht den Motor bewegen. Derartige Getriebe sind relativ massiv ausgeführt und somit kostenträchtig. Bei den als Linearantrieb ausgeführten Antrieben kann davon ausgegangen werden, dass sie als Hydraulikzylinder ausgeführt sind und in der Betriebsposition durch entsprechende Ventile sich blockiert werden.

Die vorliegende Erfindung hat sich zur Aufgabe gemacht, eine Raffeinrichtung der eingangs erwähnten Art dahingehend zu verbessern, dass die erwähnten Nachteile zumindest teilweise vermieden werden.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Raffeinrichtung dient zum wahlweisen seitlichen Zusammenführen einer Folie zum Umwickeln eines Ballens. Sie umfasst ein mit einer Kante der Folie zusammenwirkendes Raffelement, das durch wenigstens einen fremdkraftbetätigten Antrieb, der einen Motor und ein untersetzendes Getriebe umfasst, gegenüber der Folie in seitlicher Richtung zwischen einer Außerbetriebsposition und einer Betriebsposition bewegbar ist, um die Folie bedarfsweise zu raffen. Eine Halteeinrichtung dient zur bremsenden oder arretierenden Festsetzung des Raffelements in der Betriebsposition.

Auf diese Weise werden die zum Raffen (seitlichen Zusammenführen) der Folie aufzubringenden Kräfte zumindest während der meisten Zeit des Raffens durch die Halteeinrichtung aufgebracht, sodass der Antrieb und der Antriebsstrang zur Kopplung des Antriebs mit dem Raffelement weniger stabil als im Stand der Technik und somit leichter, kleiner und weniger preisaufwändig ausgeführt und/oder auf ein selbsthemmendes bzw. hoch untersetzendes Getriebe zwischen dem Motor und dem Raffelement verzichtet werden kann.

Für die Halteeinrichtung sind zwei gemeinsam oder einzeln anwendbare Varianten vorgesehen. Die erste Variante sieht vor, den als Elektromotor ausgeführten Motor des Antriebs elektrisch zu bremsen bzw. zu arretieren. Das kann im Fall eines Gleichstrommotors, der wenn er nicht elektrisch angetrieben wird, als Generator wirkt, durch einen mit den Anschlüssen des Gleichstrommotors zusammenwirkenden Widerstand oder Kurzschluss erfolgen. Bei Drehstrommotoren kann eine entsprechende Ansteuerung des Wechselrichters erfolgen, die zum Anhalten und Festsetzen des Motors dient. Die zweite Variante ist eine mechanisch auf den das Raffelement mit dem Motor koppelnden Antriebsstrang des Raffelements einwirkende Halteeinrichtung, die als Bremse oder Verrastung auf eine beliebige Stelle im Antriebsstrang einwirkt.

Die Raffeinrichtung kann zwei mit jeweils einer Kante der Folie zusammenwirkende Raffelemente umfassen, die jeweils durch einen fremdkraftbetätigten Antrieb gegenüber der Folie gegensinnig in seitlicher Richtung zwischen einer Außerbetriebsposition und einer Betriebsposition bewegbar sind und durch eine Halteeinrichtung in der Betriebsposition festsetzbar sind. Die Raffelemente können durch einen gemeinsamen Antrieb oder getrennte Antriebe bewegbar sein.

Es wäre denkbar, jedes der Raffelemente separat zu arretieren, indem man es durch eine Halteeinrichtung mit dem Gestell der Ballenpresse oder des Ballenwicklers koppelt. Eine Vereinfachung ist möglich, indem man die Raffelemente durch die Halteeinrichtung in der Betriebsposition aneinander koppelt, da hierfür nur ein einziges Halteelement zu aktiveren ist.

Die Halteeinrichtung kann einen ein- und ausschaltbaren Elektromagneten umfassen, der eingerichtet ist, mit je einem der Raffelemente verbundene Halterungen in der Betriebsposition aneinander zu halten. Bei einer anderen Ausführungsform findet ein Permanentmagnet Verwendung, der die Halterungen in der Betriebsposition aneinander hält. Die Halterungen können durch den Antrieb bei Bedarf wieder getrennt werden.

Bei einer anderen Ausführungsform kann die Halteeinrichtung einen aktorisch betätigten Riegel oder Haken umfassen, der eingerichtet ist, mit je einem der Raffelemente verbundene Halterungen in der Betriebsposition aneinander zu halten.

Als Antrieb kommt insbesondere ein Elektromotor in Frage, der über ein Zugmittel (d.h. einen Riemen- oder Kettentrieb) mit dem Raffelement gekoppelt ist. Es können jedoch auch beliebige andere Antriebe (z.B. ein oder mehrere Hydraulikzylinder oder -motore) und Antriebsstränge verwendet werden, wozu auf den eingangs zitierten Stand der Technik verwiesen sei.

Die beschriebene Raffeinrichtung kann an einer Ballenpresse oder einem Ballenwickler eingesetzt werden, die oder der mit einem Aufnahmeraum für einen Ballen versehen ist, dem durch eine Zuführeinrichtung eine von einer Vorratsrolle abwickelbare Folie zuführbar ist, wobei der Zuführeinrichtung zwischen der Vorratsrolle und dem Aufnahmeraum eine Schneideinrichtung zum Abschneiden der Folie und eine Raffeinrichtung zugeordnet ist.

Die Ballenpresse oder der Ballenwickler kann eine Steuereinrichtung aufweisen, die betreibbar ist, einen Antrieb der Schneideinrichtung und den Antrieb der Raffeinrichtung derart zu kontrollieren, dass ein fertiger Ballen zunächst mit einer gerafften Folie und anschließend mit einer ungerafften Folie umwickelt und schließlich die Folie im gerafften oder nicht gerafftem Zustand abgeschnitten wird.

### Ausführungsbeispiel

In den Zeichnungen sind nachfolgend näher beschriebene Ausführungsbeispiele dargestellt. Es zeigt:
- Fig. 1: eine schematische seitliche Ansicht einer Ballenpresse,
- Fig. 2: eine seitliche Ansicht der Folien-Zuführeinrichtung der Ballenpresse der Figur 1,
- Fig. 3: eine perspektivische Ansicht der Raffeinrichtung der Zuführeinrichtung der Figur 2 in der Betriebsposition,
- Fig. 4: eine vergrößerte Ansicht der beiden Raffelemente der Raffeinrichtung der Figur 3,
- Fig. 5: eine perspektivische Ansicht einer zweiten Ausführungsform der Raffeinrichtung,
- Fig. 6: eine Ansicht des Antriebs einer dritten Ausführungsform der Raffeinrichtung, und
- Fig. 7: eine Ansicht des Antriebs einer vierten Ausführungsform der Raffeinrichtung.

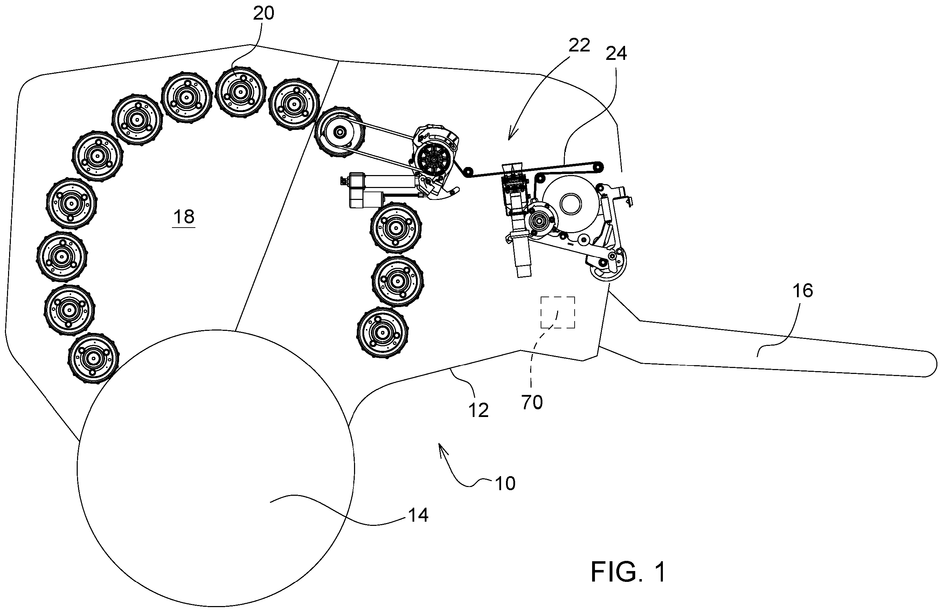

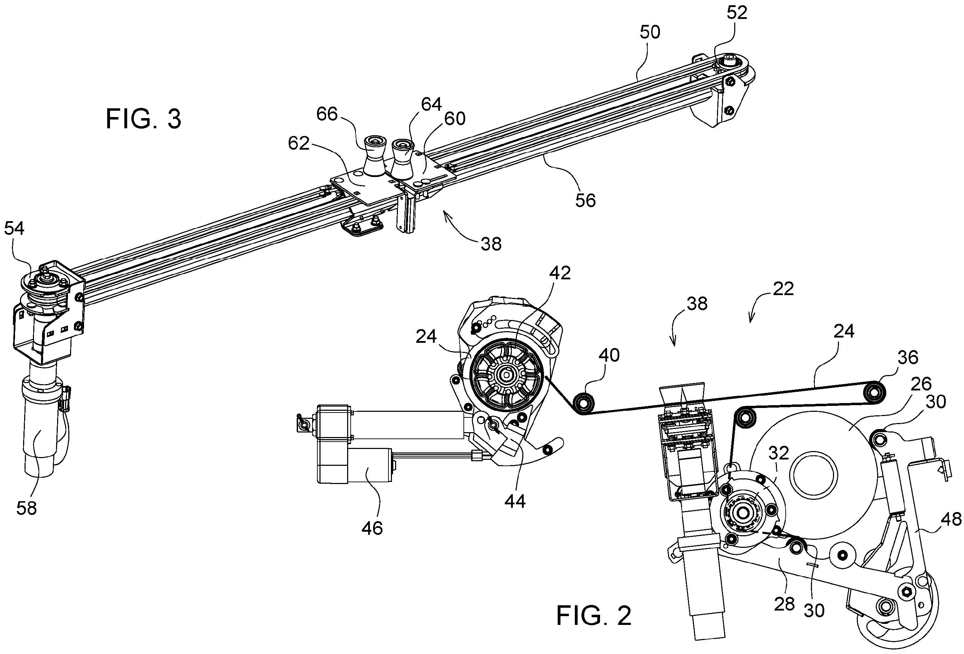

Die Figur 1 zeigt eine Rundballenpresse 10 mit einem Fahrgestell 12, das sich auf Rädern 14 abstützt und durch eine Deichsel 16 mit einem ziehenden Fahrzeug (nicht gezeigt) gekoppelt werden kann, um sie in einer Vorwärtsrichtung (in Figur 1 nach rechts) über ein Feld ziehen zu können. Die Rundballenpresse 10 umfasst weiterhin Mittel zum Aufnehmen von Erntegut (nicht gezeigt), die es im Betrieb von unten her in einen Ballenpressraum 18 fördern, der durch angetriebene Walzen 20 umrundet wird. Das Gehäuse der Rundballenpresse 10 ist rückwärtig in eine Öffnungsposition bringbar, um den fertigen Ballen auswerfen zu können. Die dargestellte Rundballenpresse 10 erstellt Ballen einer vorgegebenen Größe, da die Walzen 20 fest am Fahrgestell 12 angebracht sind; sie könnte jedoch auch als Rundballenpresse mit variabler Größe des Ballenpressraums 18 ausgeführt werden. Um einen fertigen Ballen mit Folie 24 umwickeln zu können, ist eine Zuführeinrichtung 22 für Folie 24 vorgesehen, die in der Figur 2 vergrößert dargestellt wird und dazu dient, die Folie 24 bei Bedarf durch einen zwischen zwei Walzen 20 vorgesehenen Spalt hindurch in den Ballenpressraum 18 zu fördern.

Die Figur 2 zeigt eine vergrößerte Ansicht der Zuführeinrichtung 22. Ein aufgerollter Vorrat 26 an Folie 24 ist auf einer unteren Walze 30 abgestützt, die an einem mit dem Fahrgestell 12 gekoppelten Träger 28 angebracht ist. Eine hintere Walze 30, an der der Vorrat 26 anliegt, ist an einer Schwinge 48 befestigt, die zum Erneuern des Vorrats 26 nach vorn und unten geklappt werden kann. Die Folie 24 läuft vom Vorrat 26 über eine größere, von der Folie 24 teilweise umschlungene Walze 32 (die zum Bremsen der Folie 24 und somit zum Herstellen einer gewünschten Spannung in der Folie 24 dienen kann) über weitere Walzen 34, 36, 40, 42 in den Ballenpressraum 18. Der Walze 42 ist eine Schneideinrichtung 44 zugeordnet, die durch einen Aktor 46 betrieben wird, um die Folie 24 abzuschneiden, nachdem ein Ballen umwickelt wurde.

Zwischen den Walzen 36 und 40 ist eine Raffeinrichtung 38 angeordnet, die dazu dient, die Folie 24 bei Bedarf auf eine verminderte seitliche Breite zusammenzuführen. Die Raffeinrichtung 38 ist in der Figur 3 vergrößert dargestellt. Sie umfasst ein endloses Zugmittel 50 in Form einer Kette oder eines (Zahn-) Riemens oder dergleichen, das um zwei Umlenkräder 52, 54 umläuft, die untereinander durch eine Strebe 56 verbunden sind. Eines der Umlenkräder 54 ist durch einen Antrieb 58 in Form eines Elektromotors, der durch ein untersetzendes Getriebe mit dem Umlenkrad 54 gekoppelt ist, in Drehung versetzbar. An jedem der beiden Trume des Zugmittels 50 ist je eine Halterung 60 und 62 fest angebracht. Durch Ein- und Ausschalten des Antriebs 58 kann eine Steuereinrichtung 70 (s. Figur 1) demnach kommandieren, dass die Halterungen 60, 62 symmetrisch zueinander und jeweils in entgegen gesetzter Richtung aufeinander zu in die in Figur 3 gezeigte Betriebsposition oder in eine auseinander gezogene Außerbetriebsposition (nicht gezeigt) gelangen, in welcher die Halterungen 60, 62 sich in der Nähe der Umlenkräder 52 bzw. 54 befinden. Die Halterungen 60, 62 tragen jeweils Raffelemente 64 bzw. 66, die hier als doppelte Konen ausgeführt, d.h. sanduhrartig geformt, sind. Die Strebe 56 kann als Führung für die Halterungen 60, 62 dienen, die sich durch Gleitlager oder Wälzlager an der Strebe 56 abstützen können. Die Raffelemente 64, 66 können starr oder um ihre Längsachse, die sich in der Figur 3 vertikal erstreckt, frei drehbar an den Halterungen 60, 62 angebracht sein.

Die Strebe 56 erstreckt sich quer zur Folie 24 und parallel zu ihrer Querrichtung. Die Länge der Strebe 56 ist etwas größer als die Breite der Folie 24, sodass die Raffelemente 64, 66 in ihrer Außerbetriebsposition mit ihren mittleren Bereichen, in denen ihr Durchmesser am geringsten ist, an den seitlichen Rändern der Folie 24 anliegen (um die Folie 24 seitlich und in vertikaler Richtung zu führen) oder etwas Abstand davon einnehmen. In der Betriebsposition, wie sie in der Figur 3 gezeigt ist, führen die Raffelemente 64, 66 die Folie 24 seitlich zusammen, d.h. sie raffen die Folie 24, damit sie zu Beginn eines Wickelvorgangs unproblematischer als eine auf voller Breite geführte Folie 24 in den Ballenpressraum 18 eingeführt und/oder am Ende des Wickelvorgangs leichter als eine auf voller Breite geführte Folie 24 von der Schneideinrichtung 24 abgeschnitten werden kann.

Da die Folie 24, insbesondere wenn sie relativ dick ist, beträchtliche Kräfte auf die Raffelemente 64, 66, die Halterungen 60, 62, das Zugmittel 50 und den Antrieb 58 und das darin befindliche Getriebe ausübt und somit eine hinreichend stabile Auslegung dieser Einrichtungen vonnöten werden lässt, ist eine Halteeinrichtung 68 vorgesehen, um die Halterungen 60, 62 und somit die Raffelemente 64, 66 in der Betriebsposition untereinander mechanisch zu koppeln und den Antrieb 58, das Getriebe und das Zugmittel 50 zu entlasten, sodass sie weniger stabil und somit leichter, kleiner und preiswerter ausgeführt werden können.

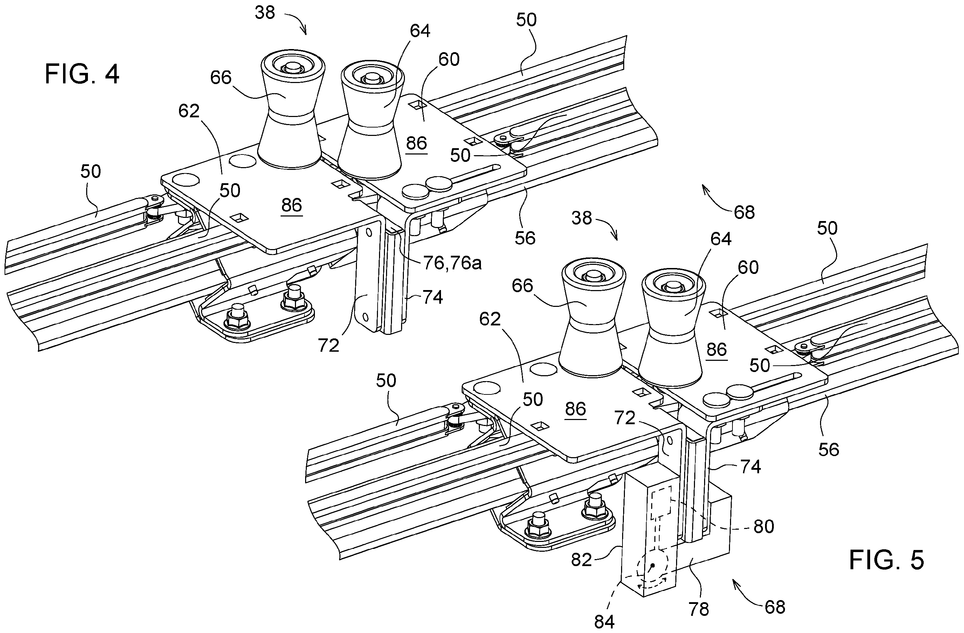

Die Figur 4 zeigt eine erste Ausführungsform der Halteeinrichtung 68. An der Unterseite einer Bodenplatte 86 der Halterungen 60, 62, von welcher sich jeweils eines der Raffelemente 64, 66 nach oben erstreckt, sind Haltewinkel 72, 74 angebracht, die sich vertikal nach unten erstrecken und unmittelbar benachbart sind. Am Haltewinkel 72 einer Halterung 62 ist ein durch die Steuereinrichtung 70 kontrollierter Elektromagnet 76 angebracht, der den ferromagnetischen Haltewinkel 74 der anderen Halterung 60 anzieht und somit die Halterungen 60, 62 in der Betriebsposition aneinander fixiert. Die Steuereinrichtung 70 aktiviert demnach den Elektromagneten 76 solange die Raffelemente 64, 66 sich in der Betriebsposition befinden, zumindest solange ein Wickelvorgang zum Umhüllen des Ballens stattfindet. Anderenfalls ist der Elektromagnet 76 durch die Steuereinrichtung 70 ausgeschaltet, um die Halterungen 60, 62 voneinander trennen zu können.

Der Elektromagnet 76 kann in der Ausführungsform der Figur 4 durch einen Permanentmagneten 76a ersetzt werden. In der Betriebsposition fixiert der Permanentmagnet 76a die Haltewinkel 72, 74 und somit die Raffelemente 64, 66 aneinander. Ein Trennen dieser magnetischen Verbindung erfolgt durch den Antrieb 58, wenn er die Raffelemente 64, 66 in die Außerbetriebsposition zieht.

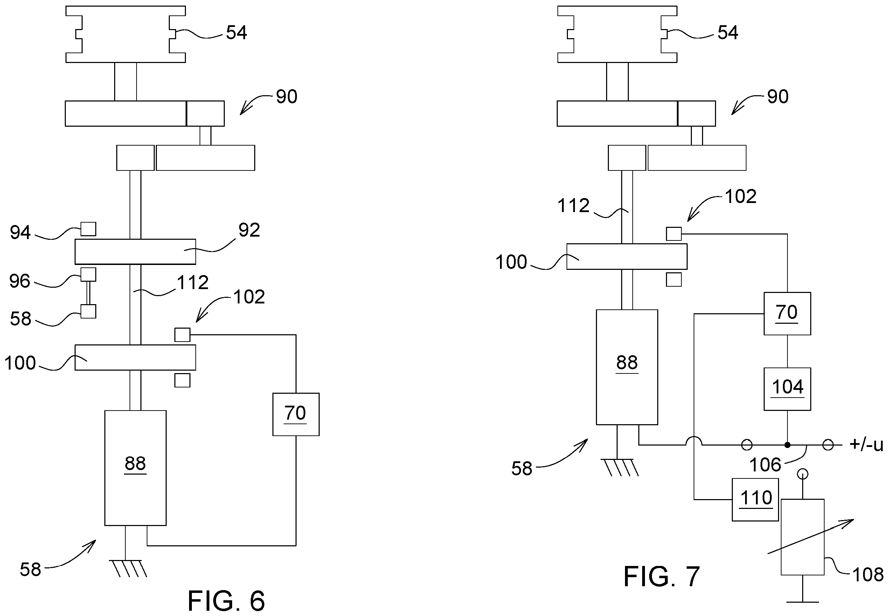

Bei der in Figur 5 gezeigten, zweiten Ausführungsform umfasst die Halteeinrichtung 68 einen Haken 78, der durch einen Aktor 80 um eine Achse 84 drehbar ist. Der Haken 78 ist am Haltewinkel 72 der Halterung 62 abgestützt und umgreift in der arretierenden Position den Haltewinkel 74 der anderen Halterung 60. Durch den von der Steuereinrichtung 70 kontrollierten Aktor 80 kann der Haken 78 um die Achse 84 nach unten gedreht werden und löst dann die Kopplung zwischen beiden Halterungen 60, 62, um die Raffelemente 64, 66 durch den Antrieb 58 in die Außerbetriebsposition verbringen zu können. Die Steuereinrichtung 70 kommandiert den Aktor 80 in die Stellung der Figur 5, nachdem sie den Antrieb 58 kommandiert hat, die Raffelemente 62, 64 in die Betriebsposition zu verbringen und letztere diese erreicht haben, was anhand der Aktivierungszeit oder des aufgenommenen Stroms des Antriebs 58 oder mittels eines Sensors zur Erfassung der Position der Halterungen 60, 62 bzw. ihres Antriebsstrangs (vgl. die Elemente 100, 102 in den Figuren 6 und 7) erfasst werden kann. Der Aktor 80 und ein ihn mit dem Haken 78 verbindendes Getriebe können in einem Gehäuse 82 angeordnet sein.

Die elektrische Versorgung des Aktors 80 der Figur 5 bzw. des Elektromagneten 76 der Figur 4 kann durch eine flexible Leitung erfolgen, die sich von einem Ende der Strebe 56 bis zur Halterung 62 erstreckt. Es wäre auch denkbar, an der Strebe 56 eine oder zwei Stromschienen (nicht gezeigt) anzubringen, die mit einem oder zwei Stromabnehmern der Halterung 62 zusammenwirkt oder zusammenwirken, um den Aktor 80 oder den Elektromagneten 76 zu versorgen. Falls nur eine Stromschiene verwendet wird, kann die Rückführung über Masse, d.h. die Strebe 56 erfolgen.

Bei einer anderen, nicht gezeigten Ausführungsform kann der Haken 78 durch einen Riegel ersetzt werden, der durch den Aktor 80 quer zum Zugmittel 50 verschiebbar ist und die Halterungen 60, 62 bei Bedarf lösbar aneinander koppelt.

Die Figur 6 zeigt den Antrieb 58 einer dritten Ausführungsform. Er umfasst einen Elektromotor 88, dessen Welle 112 über ein untersetzendes Getriebe 90 mit dem Umlenkrad 54 verbunden ist. Die Welle 112 ist auch drehfest mit einer gelochten Kodierscheibe 100 verbunden, die mit einer Lichtschranke 102 zusammenwirkt, welche die Steuerung 70 anhand der erfassten Umdrehungen der Welle 112 über die Position der Raffelemente 64, 66 informiert. Die Steuerung 70 kontrolliert den Elektromotor 88 in der oben beschriebenen Weise. Zudem ist auf der Welle 112 drehfest eine Bremsscheibe 92 angeordnet, die mit einem festen Bremselement 94 und einem beweglichen Bremselement 96 zusammenwirkt, das durch einen Aktor 98 bewegbar ist. Die Steuerung 70 kommandiert den Aktor 98 (analog zu den vorhergehenden Ausführungsformen), das Bremselement 96 gegen die Bremsscheibe 92 zu drücken, solange sich die Raffelemente 64, 66 in der Betriebsposition befinden. Dadurch erreicht man die gewünschte Festsetzung der Raffelemente 64, 66, die durch die Steuereinrichtung 70 gelöst wird, wenn die Raffelemente 64, 66 durch Aktivierung des Elektromotors 88 des Antriebs 58 in die Außerbetriebsposition zu verbringen sind. Der in Figur 6 gezeigte Elektromotor 88, das Getriebe 90 sowie die Erfassung der Drehstellung der Welle 112 können auch bei den vorhergehenden Ausführungsformen verwendet werden, in denen die Steuerung 70 anstelle des Aktors 98 der Bremse der Figur 6 den Elektromagneten 76 der Figur 4 oder den Aktor 80 der Figur 5 kontrolliert.

Die Figur 7 zeigt den Antrieb 58 einer dritten Ausführungsform. Er entspricht im Wesentlichen der Ausführungsform der Figur 6, jedoch entfällt die mechanische Bremse, die durch eine elektrische Bremse ersetzt wurde. Der als Gleichstrommotor ausgeführte Elektromotor 88 dient, denn er nicht mit einer umpolbaren Betriebsspannung +/- U verbunden ist, als Generator, dessen EMK durch einen Widerstand 108 in Wärme umsetzbar ist. Die Steuereinrichtung 70 ist hier mit einem mechanischen oder elektrischen Aktor 104 verbunden, der einen Schalter 106 betätigt, welcher den Elektromotor 88 wahlweise mit der Betriebsspannung +/- U oder mit dem Widerstand 108 verbindet, welcher durch die Steuereinrichtung 70 mit einem mechanischen oder elektrischen Aktor 110 verstellbar ist. Die Steuereinrichtung 70 ist bei dieser Ausführungsform betreibbar, den Schalter 106 in die unten gezeigte Stellung zu verbringen, wenn die Raffelemente 64, 66 die Betriebsposition erreicht haben. Eventuell auf den Elektromotor 88 wirkende Kräfte, die durch die Folie 24 bedingt werden, erzeugen eine EMK im Elektromotor 88, die durch den Widerstand 108 in Wärme umgesetzt wird und somit den Elektromotor 88 und die Raffelemente 64, 66 bremst. Ansonsten ist die Funktion wie bei den vorhergehenden Ausführungsformen.

Die Ausführungsformen nach Figur 6 und 7 würden es auch ermöglichen, die Raffelemente 64, 66 in einer Zwischenstellung zwischen der Betriebsposition und der Außerbetriebsposition zu arretieren, um die Breite der Folie 24 variieren zu können.

## Patentansprüche

1. Raffeinrichtung (38) zum wahlweisen seitlichen Zusammenführen einer Folie (24) zum Umwickeln eines Ballens, umfassend ein mit einer Kante der Folie (24) zusammenwirkendes Raffelement (64, 66), das durch wenigstens einen fremdkraftbetätigten Antrieb (58), der einen Motor (88) und ein untersetzendes Getriebe (90) umfasst, gegenüber der Folie (24) in seitlicher Richtung zwischen einer Außerbetriebsposition und einer Betriebsposition bewegbar ist, um die Folie (24) bedarfsweise zu raffen, wobei eine Halteeinrichtung (68) zur Festsetzung des Raffelements (64, 66) in der Betriebsposition vorhanden ist, **dadurch gekennzeichnet, dass** die Halteeinrichtung (68) elektrisch auf den als Elektromotor ausgeführten Motor (88) einwirkt und ihn elektrisch bremst und/oder mechanisch als Bremse oder Verrastung auf den das Raffelement (64, 66) mit dem Motor (88) koppelnden Antriebsstrang des Raffelements (64, 66) einwirkt.

2. Raffeinrichtung (38) nach Anspruch 1, wobei die Raffeinrichtung (38) zwei mit jeweils einer Kante der Folie zusammenwirkende Raffelemente (64, 66) umfasst, die durch einen gemeinsamen Antrieb (58) oder getrennte Antriebe jeweils gegenüber der Folie (24) gegensinnig in seitlicher Richtung zwischen einer Außerbetriebsposition und einer Betriebsposition bewegbar sind und in der Betriebsposition festsetzbar sind.

3. Raffeinrichtung (38) nach Anspruch 2, wobei die Raffelemente (64, 66) durch die Halteeinrichtung (68) in der Betriebsposition koppelbar sind.

4. Raffeinrichtung (38) nach einem der Ansprüche 1 bis 3, wobei die Halteeinrichtung (68) einen ein- und ausschaltbaren Elektromagneten (76) umfasst, der eingerichtet ist, mit je einem der Raffelemente (64, 66) verbundene Halterungen (60, 62) in der Betriebsposition aneinander zu halten.

5. Raffeinrichtung (38) nach einem der Ansprüche 1 bis 3, wobei die Halteeinrichtung (68) einen Permanentmagneten (76a) umfasst, der eingerichtet ist, mit je einem der Raffelemente (64, 66) verbundene Halterungen (60, 62) in der Betriebsposition aneinander zu halten und der Antrieb (58) eingerichtet ist, die Halterungen (60, 62) gegen die Kraft des Permanentmagneten (76a) auseinander zu ziehen, um die Raffelemente (64, 66) in die Außerbetriebsposition verbringen zu können.

6. Raffeinrichtung (38) nach einem der Ansprüche 1 bis 5, wobei die Halteeinrichtung (68) einen aktorisch betätigten Riegel oder Haken (78) umfasst, der eingerichtet ist, mit je einem der Raffelemente (64, 66) verbundene Halterungen (60, 62) in der Betriebsposition aneinander zu halten.

7. Raffeinrichtung (38) nach einem der Ansprüche 1 bis 6, wobei der Antrieb (58) ein Elektromotor (88) ist, der über ein Zugmittel (50) mit dem Raffelement (64, 66) gekoppelt ist.

8. Ballenpresse (10) oder Ballenwickler mit einem Aufnahmeraum (18) für einen Ballen, dem durch eine Zuführeinrichtung (22) eine von einer Vorratsrolle (26) abwickelbare Folie (24) zuführbar ist, wobei der Zuführeinrichtung (22) zwischen der Vorratsrolle (26) und dem Aufnahmeraum (18) eine Schneideinrichtung (44) zum Abschneiden der Folie (24) und eine Raffeinrichtung (38) nach einem der vorhergehenden Ansprüche zugeordnet sind.

9. Ballenpresse (10) oder Ballenwickler nach Anspruch 8, mit einer Steuereinrichtung (70), die betreibbar ist, einen Antrieb (46) der Schneideinrichtung (44) und den Antrieb (46) der Raffeinrichtung (38) und die Halteeinrichtung (68) derart zu kontrollieren, dass ein fertiger Ballen zunächst mit einer gerafften Folie (24) und anschließend mit einer ungerafften Folie (24) umwickelt und schließlich die Folie (24) im gerafften oder nicht gerafftem Zustand abgeschnitten wird.

## Claims

1. Gathering device (38) for selectively laterally bringing together a film (24) for wrapping around a bale, comprising a gathering element (64, 66) which interacts with an edge of the film (24) and, by way of at least one power-operated drive (58), which comprises a motor (88) and a reduction gear mechanism (90), is movable in relation to the film (24) in a lateral direction between a non-operational position and an operating position in order to gather the film (24) according to requirement, wherein a holding device (68) for fixing the gathering element (64, 66) in the operating position is provided, **characterized in that** the holding device (68) acts electrically on the motor (88), which is in the form of an electric motor, and brakes it electrically, and/or acts mechanically as a brake or latching means on the drivetrain of the gathering element (64, 66) that couples the gathering element (64, 66) to the motor (88) .

2. Gathering device (38) according to Claim 1, wherein the gathering device (38) comprises two gathering elements (64, 66) which interact with in each case one edge of the film and, by way of a common drive (58) or separate drives, are in each case movable in relation to the film (24) in opposite lateral directions between a non-operational position and an operating position and are fixable in the operating position.

3. Gathering device (38) according to Claim 2, wherein the gathering elements (64, 66) are able to be coupled by the holding device (68) in the operating position.

4. Gathering device (38) according to one of Claims 1 to 3, wherein the holding device (68) comprises an electromagnet (76) which is able to be switched on and off and which is configured to hold together holders (60, 62), which are connected to in each case one of the gathering elements (64, 66), in the operating position.

5. Gathering device (38) according to one of Claims 1 to 3, wherein the holding device (68) comprises a permanent magnet (76a) which is configured to hold together holders (60, 62), which are connected to in each case one of the gathering elements (64, 66), in the operating position, and the drive (58) is configured to pull the holders (60, 62) apart counter to the force of the permanent magnet (76a) in order to allow the gathering elements (64, 66) to be brought into the non-operational position.

6. Gathering device (38) according to one of Claims 1 to 5, wherein the holding device (68) comprises a bolt or hook (78) which is actuated by an actuator and which is configured to hold together holders (60, 62), which are connected to in each case one of the gathering elements (64, 66), in the operating position.

7. Gathering device (38) according to one of Claims 1 to 6, wherein the drive (58) is an electric motor (88) which is coupled to the gathering element (64, 66) via a traction mechanism (50).

8. Baler (10) or bale wrapper having a receiving space (18) for a bale, to which a film (24) able to be unwound from a supply roller (26) is able to be fed by a feeding device (22), wherein the feeding device (22) is assigned between the supply roller (26) and the receiving space (18) a cutting device (44) for cutting off the film (24) and a gathering device (38) according to one of the preceding claims.

9. Baler (10) or bale wrapper according to Claim 8, having a control device (70) which is able to be operated to control a drive (46) of the cutting device (44) and the drive (46) of the gathering device (38) and the holding device (68) in such a way that a finished bale is wrapped around firstly with a gathered film (24) and then with a non-gathered film (24) and finally the film (24) is cut off in the gathered or non-gathered state.

## Revendications

1. Dispositif de resserrement (38) pour réunir latéralement de manière sélective un film (24) pour envelopper une balle, comprenant un élément de resserrement (64, 66) coopérant avec un bord du film (24), qui est déplaçable par rapport au film (24) dans la direction latérale entre une position hors fonctionnement et une position de fonctionnement par au moins un entraînement (58) actionné par une force extérieure, qui comprend un moteur (88) et un engrenage de réduction (90), afin de resserrer le film (24) au besoin, un dispositif de maintien (68) étant présent pour bloquer l'élément de resserrement (64, 66) dans la position de fonctionnement, **caractérisé en ce que** le dispositif de maintien (68) agit électriquement sur le moteur (88) réalisé sous forme de moteur électrique et le freine électriquement et/ou agit mécaniquement en tant que frein ou encliquetage sur la chaîne cinématique de l'élément de resserrement (64, 66) couplant l'élément de resserrement (64, 66) au moteur (88).

2. Dispositif de resserrement (38) selon la revendication 1, dans lequel le dispositif de resserrement (38) comprend deux éléments de resserrement (64, 66) coopérant chacun avec un bord du film, qui sont déplaçables par un entraînement commun (58) ou des entraînements séparés, chacun en sens inverse par rapport au film (24), dans la direction latérale entre une position hors fonctionnement et une position de fonctionnement et peuvent être bloqués dans la position de fonctionnement.

3. Dispositif de resserrement (38) selon la revendication 2, dans lequel les éléments de resserrement (64, 66) peuvent être couplés dans la position de fonctionnement par le dispositif de maintien (68).

4. Dispositif de resserrement (38) selon l'une quelconque des revendications 1 à 3, dans lequel le dispositif de maintien (68) comprend un électroaimant (76) pouvant être activé et désactivé, qui est conçu pour maintenir l'un contre l'autre, dans la position de fonctionnement, des supports (60, 62) reliés à chacun des éléments de resserrement (64, 66).

5. Dispositif de resserrement (38) selon l'une quelconque des revendications 1 à 3, dans lequel le dispositif de maintien (68) comprend un aimant permanent (76a) qui est conçu pour maintenir l'un contre l'autre, dans la position de fonctionnement, des supports (60, 62) reliés à chacun des éléments de resserrement (64, 66) et l'entraînement (58) est conçu pour écarter les supports (60, 62) l'un de l'autre à l'encontre de la force de l'aimant permanent (76a) afin de pouvoir amener les éléments de resserrement (64, 66) dans la position hors fonctionnement.

6. Dispositif de resserrement (38) selon l'une quelconque des revendications 1 à 5, dans lequel le dispositif de maintien (68) comprend un verrou ou un crochet (78) actionné par un actionneur, qui est conçu pour maintenir l'un contre l'autre, dans la position de fonctionnement, des supports (60, 62) reliés à chacun des éléments de resserrement (64, 66).

7. Dispositif de resserrement (38) selon l'une quelconque des revendications 1 à 6, dans lequel l'entraînement (58) est un moteur électrique (88) qui est couplé à l'élément de resserrement (64, 66) par l'intermédiaire d'un moyen de traction (50).

8. Presse à balles (10) ou enveloppeuse de balles avec un espace de réception (18) pour une balle, à laquelle peut être amené par un dispositif d'amenée (22) un film (24) pouvant être déroulé d'un rouleau de réserve (26), un dispositif de coupe (44) pour couper le film (24) et un dispositif de resserrement (38) selon l'une quelconque des revendications précédentes étant associés au dispositif d'amenée (22) entre le rouleau de réserve (26) et l'espace de réception (18).

9. Presse à balles (10) ou enveloppeuse de balles selon la revendication 8, avec un dispositif de commande (70) qui peut être exploité pour commander un entraînement (46) du dispositif de coupe (44) et l'entraînement (46) du dispositif de resserrement (38) et le dispositif de maintien (68) de telle sorte qu'une balle finie est d'abord enveloppée d'un film (24) resserré, puis d'un film (24) non resserré, et enfin que le film (24) est coupé à l'état resserré ou non resserré.
